(19) Europäisches Patentamt
European Patent Office
Office européen des brevets

(11) **EP 3 923 641 B1**

(12) **EUROPEAN PATENT SPECIFICATION**

(45) Date of publication and mention
of the grant of the patent:
**25.09.2024 Bulletin 2024/39**

(21) Application number: **20756122.6**

(22) Date of filing: **21.01.2020**

(51) International Patent Classification (IPC):
*H04W 72/0446* (2023.01)   *H04W 92/18* (2009.01)
*H04L 27/26* (2006.01)   *H04L 5/00* (2006.01)
*H04W 24/02* (2009.01)   *H04W 4/40* (2018.01)
*H04W 56/00* (2009.01)

(52) Cooperative Patent Classification (CPC):
**H04L 27/2692; H04L 5/0048; H04L 5/0053;**
**H04W 4/40; H04W 56/001;** H04L 27/2605;
H04W 24/02; H04W 72/0446; H04W 76/14;
H04W 92/18

(86) International application number:
**PCT/CN2020/073365**

(87) International publication number:
**WO 2020/164374 (20.08.2020 Gazette 2020/34)**

(54) **COMMUNICATION METHODS, COMMUNICATION DEVICES, COMPUTER PROGRAM AND COMPUTER-READABLE MEDIUM**

KOMMUNIKATIONSVERFAHREN, KOMMUNIKATIONSVORRICHTUNGEN, COMPUTERPROGRAMM UND COMPUTERLESBARES MEDIUM

PROCÉDÉS DE COMMUNICATION, DISPOSITIFS DE COMMUNICATION, PROGRAMME INFORMATIQUE ET SUPPORT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2019 CN 201910117982**

(43) Date of publication of application:
**15.12.2021 Bulletin 2021/50**

(73) Proprietor: **Huawei Technologies Co., Ltd.**
**Shenzhen, Guangdong 518129 (CN)**

(72) Inventors:
• **LI, Chao**
**Shenzhen, Guangdong 518129 (CN)**
• **MO, Yong**
**Shenzhen, Guangdong 518129 (CN)**
• **ZHANG, Xingwei**
**Shenzhen, Guangdong 518129 (CN)**
• **LUO, Jun**
**Shenzhen, Guangdong 518129 (CN)**
• **YUAN, Pu**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**WO-A1-2020/009553   CN-A- 107 027 166**
**CN-A- 108 419 295   CN-A- 108 668 371**
**US-A1- 2019 045 465   US-A1- 2019 045 465**

• **HUAWEI ET AL: "Sidelink synchronization mechanisms for NR V2X", vol. RAN WG1, no. Taipei; 20190121 - 20190125, 20 January 2019 (2019-01-20), XP051592951, Retrieved from the Internet <URL:http://www.3gpp.org/ftp/Meetings%5F3GPP%5FSYNC/RAN1/Docs/R1%2D1900025%2Ezip > [retrieved on 20190120]**

- **LG ELECTRONICS: "Discussion on sidelink synchronization for NR V2X", vol. RAN WG1, no. Spokane, USA; 20181112 - 20181116, 11 November 2018 (2018-11-11), XP051555771, Retrieved from the Internet <URL:http://www.3gpp.org/ftp/Meetings%5F3GPP%5FSYNC/RAN1/Docs/R1%2D1813861%2Ezip> [retrieved on 20181111]**
- **CATT: "Offline discussion summary of AI 7.2.4.1.3 V2X SL Synchronization", vol. RAN WG1, no. Taipei; 20190121 - 20190125, 25 January 2019 (2019-01-25), XP051601360, Retrieved from the Internet <URL:http://www.3gpp.org/ftp/tsg%5Fran/WG1%5FRL1/TSGR1%5FAH/NR%5FAH%5F1901/Docs/R1%2D1901448%2Ezip> [retrieved on 20190125]**

- **NOKIA ET AL: "Discussion on NR V2X Sidelink Synchronization", vol. RAN WG1, no. Spokane, USA; 20181112 - 20181116, 3 November 2018 (2018-11-03), XP051479859, Retrieved from the Internet <URL:http://www.3gpp.org/ftp/tsg%5Fran/WG1%5FRL1/TSGR1%5F95/Docs/R1%2D1813521%2Ezip> [retrieved on 20181103]**
- **VIVO: "NR sidelink synchronization mechanism", 3GPP TSG RAN WG1 MEETING #95, R1-1812308, 16 September 2018 (2018-09-16), XP051478497, DOI: 20200317180557A**

## Description

This application claims priority to Chinese Patent Application No. 201910117982.5, filed with the Chinese Patent Office on February 15, 2019 and entitled "COMMUNICATION METHOD AND COMMUNICATIONS APPARATUS".

## TECHNICAL FIELD

This application relates to the communications field, and in particular, to communication methods and communications apparatuses, a computer program and a computer-readable medium.

## BACKGROUND

In a field of wireless communications, a terminal device may communicate with another terminal device through relay by a network device, or may directly communicate with another terminal device without passing through the network device. When a terminal device directly communicates with another terminal device without passing through a network device, a communication link between the two terminal devices may be referred to as a sidelink (sidelink), a direct link, or a sidelink.

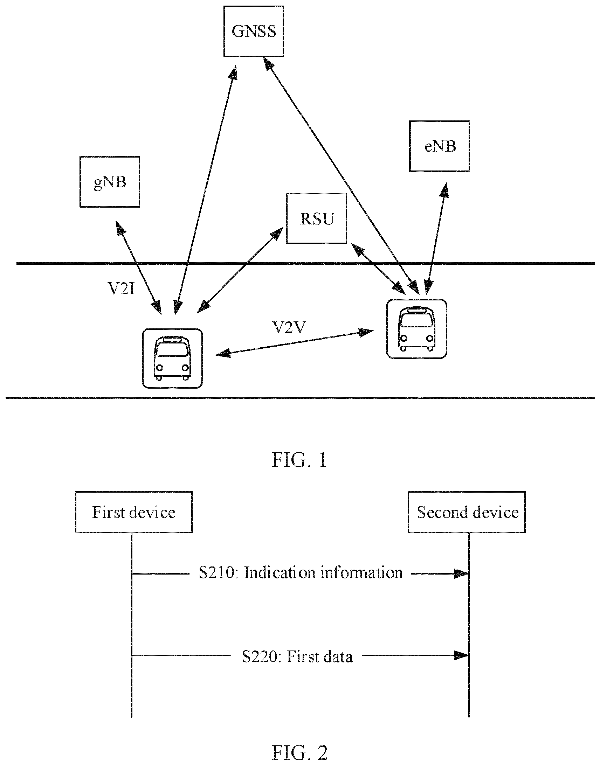

A vehicle-to-everything (vehicle to X, V2X) communications system is a basis for implementing unmanned driving. In the V2X communications system, a vehicle, as a terminal device, may communicate with another terminal device on a sidelink. Because data transmitted in the V2X communications system is related to life and property safety of a person in a driving process, there is a relatively high requirement on transmission reliability for the data transmitted in the V2X communications system, and each communications device in the V2X communications system needs to adjust a clock of each communications device based on a synchronization signal. This improves the transmission reliability. In addition, in an actual communication process, because a communications device also needs to send or receive a signal from another device on a V2X link in a synchronization process, how the communications device coordinates sending and receiving of a synchronization signal and a service data signal, to ensure reliable receiving of the synchronization signal and the data. In the prior art, a requirement for data transmission reliability cannot be met in a sidelink communication mode.
3GPP TSG RAN WG1 Ad-Hoc Meeting 1901 R1-1900025 discloses that NR V2X sidelink synchronization signals and PSBCH use NR SSB structure as the starting point including sidelink PSS (S-PSS), sidelink SSS (S-SSS). Figure 2 shows a possible S-SSB structure, which consist of 6 symbols with {S-PSS, S-PSS, S-SSS, S-SSS, PSBCH, PSBCH}. Note that S-PSS, S-SSS are repeated twice as LTE V2X to support better detection performance in high speed scenarios, e.g. 250km/s. The first S-PSS symbol can be also used for AGC purpose.
3GPP TSG RAN WG1 Meeting #95 R1-1813861 discloses that the design of NR V2X sidelink synchronization signals and PSBCH uses NR SSB structure as the starting point with the following properties, NR V2X synchronization signals include sidelink PSS (S-PSS) and sidelink SSS (S-SSS) and are structured with PSBCH in a block format (S-SSB).

## SUMMARY

This application provides communication methods, communication apparatuses, a computer program and a computer-readable medium, to meet data transmission reliability on a sidelink. The invention is set out in the appended set of claims.

## BRIEF DESCRIPTION OF DRAWINGS

    FIG. 1 is a schematic diagram of a communications system to which this application is applicable;
    FIG. 2 is a schematic diagram of a communication method according to this application;
    FIG. 3 is a schematic structural diagram of a type of a synchronization signal block according to this application;
    FIG. 4 is a schematic structural diagram of another type of a synchronization signal block according to this application;
    FIG. 5 is a schematic diagram of another communication method according to this application;
    FIG. 6 is a schematic diagram of synchronization signal block resource configuration according to this application;
    FIG. 7 is a schematic diagram of synchronization periodicity configuration according to this application;
    FIG. 8 is a schematic diagram of still another communication method according to this application;
    FIG. 9 is a schematic diagram of a communications apparatus according to this application;
    FIG. 10 is a schematic diagram of a terminal device according to this application; and
    FIG. 11 is a schematic diagram of a network device according to this application.

## DESCRIPTION OF EMBODIMENTS

Currently, a vehicle may obtain road condition information or receive an information service in time through vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication. The communication manners may be collectively referred to as V2X communication. The V2V communication and the V2I communication are used as a common example. FIG. 1 is a schematic diagram of the V2V communication and the V2I communication. As shown in FIG. 1, a vehicle may broadcast information about the vehicle such as a driving speed, a driving direction, a specific position, and whether emergency braking is performed to a nearby vehicle through the V2V communication, so that a driver of the nearby vehicle can obtain the information to better learn of a traffic condition outside a line of sight, to predict a danger and further avoid the danger. For the V2I communication, in addition to exchange of the foregoing security information, a roadside infrastructure such as a roadside unit (roadside unit, RSU) may provide various service information and data network access for the vehicle.

The vehicle may further exchange information with an eNB (eNB) in a long term evolution (long term evolution, LTE) system, a gNB (gNB) in a fifth generation (fifth generation, 5G) communications system, and a global navigation satellite system (global navigation satellite system, GNSS). For example, the vehicle may obtain a synchronization signal from the foregoing devices.

A scenario shown in FIG. 1 is merely an example for description, and a communications system to which this application is applicable is not limited thereto. There may alternatively be another quantity of vehicles, eNBs, gNBs, RSUs, and GNSSs.

In addition, a first device and a second device described in this application may be vehicles having a communication function shown in FIG. 1, or may be in-vehicle electronic systems, or may be mobile phones, or may be wearable electronic devices, or may be other communications devices that perform communication according to a V2X protocol or a relay link protocol between base stations.

The following describes in detail examples of a communication method according to this application.

FIG. 2 shows a communication method according to this application. The method 200 includes the following steps.

S210: A first device sends indication information, where the indication information is used to indicate whether the first device sends a first synchronization signal block in a synchronization slot of a sidelink, and the synchronization slot is used to transmit a synchronization signal block.

S220: The first device sends first data in the synchronization slot of the sidelink.

In this application, the synchronization signal block is a sidelink synchronization signal block (sidelink synchronization signal block, S-SSB), and the S-SSB includes at least one type of information of a primary sidelink synchronization signal (primary sidelink synchronization signal, PSSS), a secondary sidelink synchronization signal (secondary sidelink synchronization signal, SSSS), and a sidelink physical broadcast channel (physical sidelink broadcast channel, PSBCH).

A slot for sending or receiving the S-SSB is the synchronization slot. Duration of the synchronization slot is not limited in this application. For example, the duration of the synchronization slot may be related to a subcarrier spacing (subcarrier spacing. SCS). The duration of the synchronization slot varies with the subcarrier spacing. For example, the duration of the synchronization slot may be 1 millisecond (ms), 0.5 ms, 0.25 ms, 0.125 ms, or the like. This is not limited in this application.

The first synchronization signal block represents one S-SSB. The term "first" is only used to distinguish from a second synchronization signal block, and does not have another limited meaning. A meaning of the term "first" of the first data and the first device is similar to that of the foregoing term "first".

The first device is a communications device having to-be-sent data (namely, the first data). Because a sending time of the first data is in the synchronization slot, before sending the first data, the first device needs to indicate whether the first device sends the first synchronization signal block in the synchronization slot, so that a receiver (for example, a second device) that receives the first data determines whether to prepare to receive the first synchronization signal block, or the receiver determines a symbol position at which the first data starts in the synchronization slot.

For example, when the indication information indicates that the first device is to send a first S-SSB in the synchronization slot, and the second device needs to receive, in the synchronization slot, the first S-SSB sent by the first device, the second device may make a corresponding receiving preparation based on the first data and a time domain position of the first S-SSB in the synchronization slot. The receiving preparation is, for example, reserving one symbol after receiving the first S-SSB, performing automatic gain control (automatic gain control, AGC) processing after a gap (GAP), and then receiving and demodulating corresponding data.

It should be noted that, when the first device transmits the first data and the first S-SSB, the first device is in a continuous transmission status, and does not need to perform receive/send switching. Therefore, the first device may continuously send the first data and the first S-SSB, and does not need to reserve one symbol. Certainly, the first device may alternatively select to reserve one symbol between the first data and the first S-SSB.

When the indication information indicates that the first device does not send the first S-SSB in the synchronization slot, the first device may select to receive a second S-SSB in the synchronization slot. The second S-SSB may be a synchronization signal sent by a synchronization source with a high priority, and the first device may perform synchronization based on the second S-SSB.

In this case, the first device needs to perform the receive/send switching or send/receive switching. Therefore, one gap needs to be separated between the two steps of receiving the second S-SSB and sending the first data by the first device. The send/receiving means that after sending a signal, the first device switches a duplexer of the first device, to switch to a receiving status. The receive/send switching means that after receiving a signal, the first device switches a duplexer of the first device, to switch to a transmitting status. Both the two manners have a specific hardware switching time. Therefore, duration of one gap is needed to perform this operation.

In addition to one gap required for the receive/send switching, the last symbol of the synchronization slot is also a gap, to implement the send/receive switching. For example, a data packet of the first device can be transmitted in one slot, and when the first device switches to the receiving status in a next slot, the send/receive switching may be performed by using the last gap in the synchronization slot. Therefore, no matter what information is received or sent by the first device in the synchronization slot, the first device cannot occupy the last symbol of the synchronization slot. In other words, a time domain symbol occupied by the first data is a symbol other than a symbol occupied by the first synchronization signal block and the last symbol in the synchronization slot. The second device also needs to comply with the foregoing constraint.

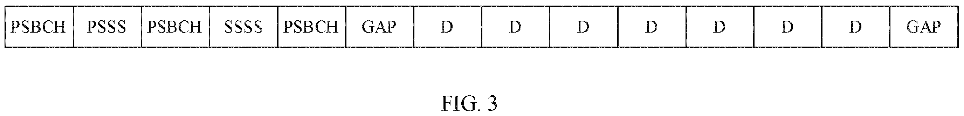

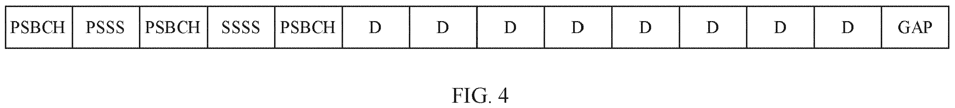

FIG. 3 and FIG. 4 are schematic structural diagrams of two types of synchronization slots according to this application.

In FIG. 3, the first device receives the second S-SSB in the first half of the slot, and sends the first data in the second half of the slot. Because the first device needs to perform the receive/send switching, the second S-SSB and the first data need to be separated by one gap.

Correspondingly, the second device may also receive the second S-SSB in the first half of the slot, and receive the first data in the second half of the slot. Because the second device needs to receive signals from different transmitters, after receiving the second S-SSB, the second device also needs to reserve one symbol to prepare for receiving.

In FIG. 4, the first device sends the first S-SSB in the first half of the slot, and sends the first data in the second half of the slot. Because the first device is in a continuous sending status, there is no need to reserve one gap between the first S-SSB and the first data.

Correspondingly, the second device may also receive the first S-SSB in the first half of the slot, and receive the first data in the second half of the slot. Because the second device receives a signal from a same transmitter, after receiving the second S-SSB, the second device does not need to reserve one symbol to prepare for receiving.

FIG. 3 and FIG. 4 are merely examples for description. Alternatively, there may be another quantity of symbols occupied by the S-SSB and the first data. The first data may be located on a symbol in the second half of the synchronization slot, or may be located on a symbol in the first half of the synchronization slot.

The first device may indicate the second device in an explicit indication manner. For example, a value of the indication information is used to indicate whether the first device sends the first S-SSB in the synchronization slot. The indication information may be a 1-bit field. When a value of the field is "0", it represents that the first device does not send the first S-SSB in the synchronization slot. When the value of the field is "1", it represents that the first device sends the first S-SSB in the synchronization slot. The field may be an independent field, or may be implicitly indicated by using another field. This is not limited in this application.

When the first device sends the first S-SSB, the indication information may be carried in a PSBCH of the first S-SSB.

Alternatively, the indication information may be side link control information (sidelink control information, SCI), and the SCI may be carried in the first data; or the indication information may be one piece of information independent of the first data. In this case, all or a portion of transmission resources of the first data are transmission resources of the SCI.

The first device may alternatively indicate the second device in an implicit indication manner. For example, a sequence of a demodulation reference signal (demodulation reference signal, DMRS) of the first data is used to indicate whether the first device sends the first S-SSB in the synchronization slot. When the sequence of the DMRS is a first sequence, it represents that the first device does not send the first S-SSB in the synchronization slot. When the sequence of the DMRS is a second sequence, it represents that the first device sends the first S-SSB in the synchronization slot.

Similarly, the first device may alternatively indicate, by using a frequency domain position of the DMRS of the first data, whether the first device sends the first S-SSB in the synchronization slot. When the frequency domain position of the DMRS is in a first frequency band, it represents that the first device does not send the first S-SSB in the synchronization slot. When the frequency domain position of the DMRS is in a second frequency band, it represents that the first device sends the first S-SSB in the synchronization slot.

When the sequence of the DMRS is used for indication, optionally, corresponding information may be indicated based on different initial values of the sequence.

For example, the DMRS of the PSBCH is used to indicate two statuses of one bit, to indicate whether the first device sends the first S-SSB in the synchronization slot. A DMRS demodulated by the PSBCH may be used for indication, and a sequence for generating the DMRS may be used for indication. The two statuses respectively correspond to two different sequences of the DMRS. Namely, Status 1: a sequence 1 of the DMRS, and Status 2: a sequence 2 of the DMRS.

Optionally, a manner of generating different sequences of the DMRS may be using initial values of the sequences of the DMRS. For example, if the sequence for generating the DMRS is a random sequence, an initial value (cinit) of the random sequence is generated in any one of the following manners, and then the random sequence used by the DMRS is generated according to cinit:

$$c_{init} = \left(2^m * N_1 * N_2 + N_3 + x_b\right) \bmod(M)$$

or

the initial value of the sequence of the DMRS is determined according to the following formula:

$$c_{init} = \left(2^m * (N_1 + x_b) * N_2 + N_3\right) \bmod(M)$$

or
the initial value of the sequence of the DMRS is determined according to the following formula:

$$c_{init} = \left(2^m * N_1 * (N_2 + x_b) + N_3\right) \bmod(M)$$

where
$x_b$ represents the indication information that needs to be indicated, cinit is the initial value of the sequence of the DMRS, f(x) is a function of a second parameter, x represents the second parameter, mod represents a modulo operation, and m, N1, N2, M, and N3 are preset integers.

This application further provides another communication method. A first device may send a first S-SSB in a synchronization slot, and indicate, by using indication information, whether the first device sends first data in the synchronization slot. A specific implementation is described as follows.

The first device sends the indication information, where the indication information is used to indicate whether the first device sends the first data in the synchronization slot of a sidelink, and the synchronization slot is used to transmit a synchronization signal block; and
the first device sends a first synchronization signal block in the synchronization slot of the sidelink.

Optionally, the indication information indicates that the first device sends the first data in the synchronization slot, and a time domain resource occupied by the first data is adjacent to a time domain resource occupied by the first synchronization signal block.

Optionally, a time domain symbol occupied by the first data is a symbol other than a symbol occupied by the first synchronization signal block and the last symbol in the synchronization slot.

Optionally, the indication information is carried in the first synchronization signal block.

Optionally, the indication information is a DMRS sequence of the first synchronization signal block or a frequency domain position of the DMRS of the first synchronization signal block.

Optionally, the indication information indicates the first device not to send the first data in the synchronization slot.

Optionally, the method further includes:
The first device receives a second synchronization signal block in the synchronization slot, where a time domain resource occupied by the first synchronization signal block and a time domain resource occupied by the second synchronization signal block are separated by one gap.

Optionally, a time domain symbol occupied by the second synchronization signal block is a symbol, in the synchronization slot, that is other than the symbol occupied by the first synchronization signal block, the gap, and the last symbol in the synchronization slot.

Optionally, the indication information is transmitted on a transmission resource of the first data, and a symbol occupied by the indication information and the symbol occupied by the first synchronization signal block are separated by at least one symbol.

The first device may indicate, in an explicit indication manner, whether the first device sends the first data in the synchronization slot, or may indicate, in an implicit indication manner, whether the first device sends the first data in the synchronization slot.

For example, the sequence of the DMRS of the first S-SSB is used to indicate whether the first device sends the first data in the synchronization slot. When the sequence of the DMRS is a first sequence, it represents that the first device does not send the first data in the synchronization slot. When the sequence of the DMRS is a second sequence, it represents that the first device sends the first data in the synchronization slot.

Similarly, the first device may alternatively indicate, by using a frequency domain position of the DMRS of the first S-SSB, whether the first device sends the first data in the synchronization slot. When the frequency domain position of the DMRS is in a first frequency band, it represents that the first device does not send the first data in the synchronization slot. When the frequency domain position of the DMRS is in a second frequency band, it represents that the first device sends the first data in the synchronization slot.

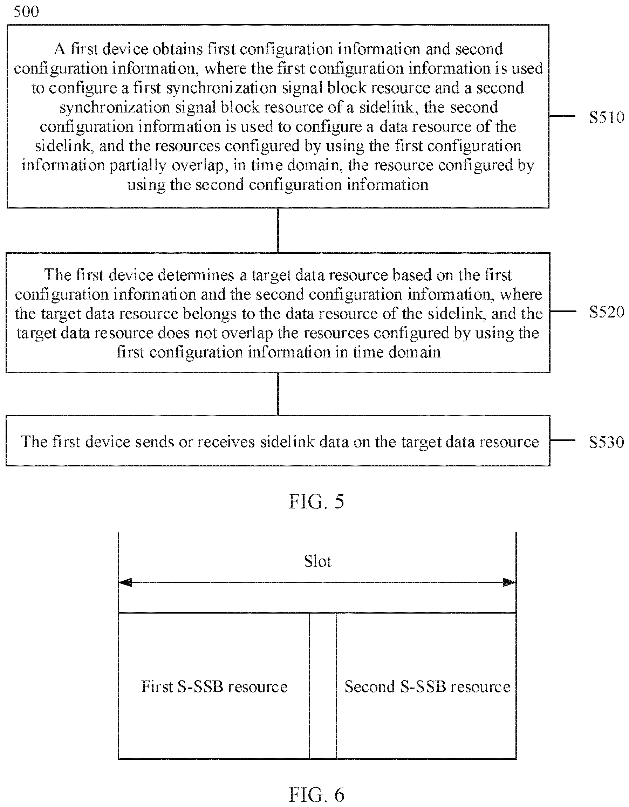

FIG. 5 shows another communication method according to this application. The method 500 includes the following steps.

S510: A first device obtains first configuration information and second configuration information, where the first configuration information is used to configure a first synchronization signal block resource and a second synchronization signal block resource of a sidelink, the second configuration information is used to configure a data resource of the sidelink, and the resources configured by using the first configuration information partially overlap, in time domain, the resource configured by using the second configuration information.

S520: The first device determines a target data resource based on the first configuration information and the second configuration information, where the target data resource belongs to the data resource of the sidelink, and the target data resource does not overlap the resources configured by using the first configuration information in time domain.

S530: The first device sends or receives sidelink data on the target data resource.

Optionally, the first configuration information and the second configuration information may be indicated by a base station. For example, the two pieces of configuration information may be carried in a system message (system information block, SIB), a radio resource control (radio resource control, RRC) message, or downlink control information (downlink control information, DCI). Optionally, the first configuration information and the second configuration information may be indicated by using preconfigured (preconfigured) information.

The first device may be an eNB, a gNB, or an RSU shown in FIG. 1. Each synchronization signal block resource may be used to transmit one or more S-SSBs. Each data resource may also be used to transmit one or more pieces of data. In this application, unless otherwise specified, the data refers to information other than the S-SSB, for example, service data and/or control information.

Different sidelink resources configured by a network device for the first device may overlap. Because an S-SSB is a precondition for ensuring normal receiving of other data, an S-SSB resource usually has a relatively high priority. When the S-SSB resource overlaps the data resource, the first device needs to avoid using an overlapped resource when sending the sidelink data. In other words, the first device needs to determine the target data resource that does not include the overlapped resource, and sends or receives the sidelink data on the target data resource, to avoid impact of the sidelink data on the S-SSB.

Optionally, the first configuration information includes at least one of the following information:

  periodicities of the first synchronization signal block resource and the second synchronization signal block resource;
  a time domain offset between the first synchronization signal block resource and the second synchronization signal block resource;
  quantities of synchronization signal blocks of the first synchronization signal block resource and the second synchronization signal block resource in one periodicity; or
  frequency domain positions of the first synchronization signal block resource and the second synchronization signal block resource.

A unit of the time domain offset is a slot and/or a symbol. For example, the offset may indicate that a position of the first synchronization signal block is a symbol on which the first synchronization signal block is placed starting from the 7th symbol in the 2nd slot; or may be a symbol on which the first synchronization signal block is placed starting from the 0th symbol in the 3rd slot.

Optionally, the second configuration information includes at least one of the following information:

  time domain position indication information of the data resource;
  periodicity indication information of the data resource; or
  frequency domain position indication information of the data resource.

The time domain position indication information indicates a slot in which the data resource is located and/or a specific symbol position in the slot. The time domain position indication information may be carried in a bitmap manner.

FIG. 6 shows a method for configuring a first S-SSB resource and a second S-SSB resource. The two resources are configured in one slot, and the two resources are time division multiplexed in the slot.

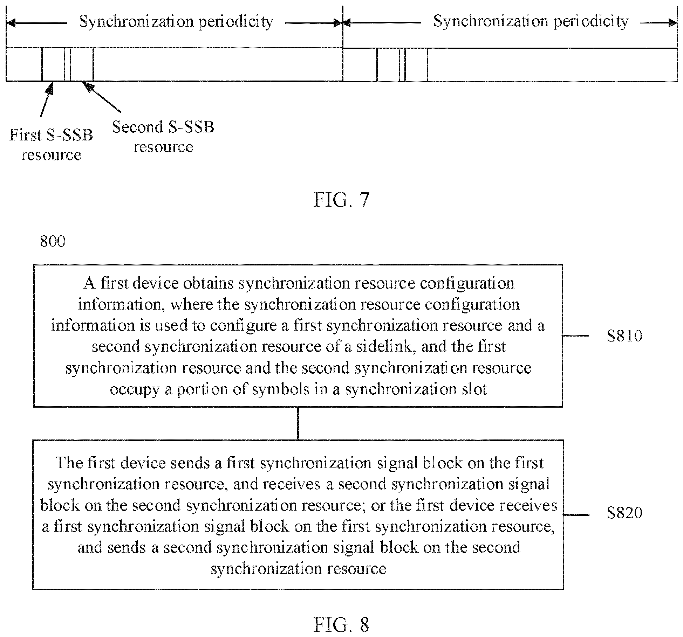

FIG. 7 shows configuration of a first S-SSB resource and a second S-SSB resource in one synchronization periodicity. Duration of the synchronization periodicity is, for example, 160 milliseconds (ms).

After determining the first S-SSB resource and the second S-SSB resource, a first device may receive a first S-SSB on the first S-SSB resource, and send a second S-SSB on the second S-SSB resource; or the first device may send the first S-SSB on the first S-SSB resource, and receive the second S-SSB on the second S-SSB resource.

When the first S-SSB resource and the second S-SSB resource are configured in one slot (for example, a first slot), because there are quite few remaining time domain resources in the slot, a target data resource determined by the first device is located in another slot (for example, a second slot). Therefore, a bit rate of sidelink data can be increased, and transmission reliability can be improved.

When the first S-SSB resource and the second S-SSB resource are configured in two slots (for example, the first slot and the second slot), remaining time domain resources in the slots can further be used to transmit the sidelink data. Therefore, the target data resource determined by the first device may be located in the first slot and/or the second slot, so that resource utilization can be improved, and a delay of transmitting data by the first device can be reduced.

The first device may determine a position of the target data resource based on a volume of information of the side link data. When the volume of information is relatively small, it may be determined that the target data resource is located in the first slot and/or the second slot. When the volume of information is relatively large, it may be determined that the target data resource is located in a third slot.

For example, when the sidelink data is control information, the first device may transmit (send and/or receive) the control information in the first slot and/or the second slot. When the sidelink data is service data, the first device may transmit (send and/or receive) the service data in the third slot.

It should be understood that the method 500 may be used in combination with the method 200. For example, after the first device determines the first S-SSB resource and the second S-SSB resource, if first data may be further sent in the synchronization slot, for example, the first S-SSB resource and the second S-SSB resource being not in one slot, the first device may perform the method 200. The method 200 includes: The first device sends indication information to a second device, where the indication information indicates whether a synchronization signal block is transmitted in a synchronization slot in which the first S-SSB resource is located, and/or indicates whether a synchronization signal block is transmitted in a synchronization slot in which the second S-SSB resource is located.

FIG. 8 shows still another communication method according to this application. The method 800 includes the following steps.

S810: A first device obtains synchronization resource configuration information, where the synchronization resource configuration information is used to configure a first synchronization resource and a second synchronization resource of a sidelink, and the first synchronization resource and the second synchronization resource occupy a portion of symbols in a synchronization slot.

S820: The first device sends a first synchronization signal block on the first synchronization resource, and receives a second synchronization signal block on the second synchronization resource; or the first device receives a first synchronization signal block on the first synchronization resource, and sends a second synchronization signal block on the second synchronization resource.

When the first device does not send data, a network device does not need to configure a data resource for the first device. In this way, the first device may directly send an S-SSB on a synchronization resource.

The synchronization resource configuration information may be preset information, for example, information preconfigured in a communication protocol. Alternatively, the synchronization resource configuration information may be information received by the first device from the network device. For example, the network device configures the first synchronization resource and the second synchronization resource for the first device by using SIB signaling, RRC signaling, or DCI signaling, and the SIB signaling, the RRC signaling, or the DCI signaling carries the synchronization resource configuration information.

Optionally, the synchronization resource configuration information includes at least one of the following:

a periodicity of a synchronization signal;
a time domain offset of the synchronization signal;
a quantity of synchronization signals in a same periodicity; or
a frequency domain position of the synchronization signal.

Optionally, a unit of the time domain offset of the synchronization signal is a slot and/or a symbol. For example, the offset may be one slot or one symbol, or may be three slots plus five symbols.

Optionally, the synchronization resource configuration information is further used to configure that the first synchronization resource is located in the first half of the synchronization slot and the second synchronization resource is located in the second half of the synchronization slot.

Optionally, in this specification, the first half of the synchronization slot refers to a plurality of symbols that are used for a synchronization signal block and that are occupied starting from the 1st symbol in the slot. The second half of the synchronization slot refers to a plurality of symbols that are used for a synchronization signal block and that are occupied starting from a symbol in the middle of the slot to the last symbol of the slot.

Optionally, in the method 800, the synchronization resources configured by using the synchronization resource configuration information further have the following features:

for different subcarrier spacings, different quantities of synchronization signal blocks may be configured for the first synchronization resource; and/or
for different subcarrier spacings, different quantities of synchronization signal blocks may be configured for the second synchronization resource.

Optionally, the quantity of configurable synchronization signal blocks may be a maximum quantity of available synchronization signal blocks, or may be a quantity of synchronization signal blocks that are actually configured for use.

For example, a subcarrier spacing of the synchronization signal is 15 kHz, and both the first synchronization resource and the second synchronization resource carry one S-SSB; or

a subcarrier spacing of a frequency domain resource occupied by the synchronization signal is 30 kHz, and both the first synchronization resource and the second synchronization resource carry two S-SSBs; or

a subcarrier spacing of a frequency domain resource occupied by the synchronization signal is 60 kHz, and both the first synchronization resource and the second synchronization resource cany four S-SSBs; or

a subcarrier spacing of a frequency domain resource occupied by the synchronization signal is 120 kHz, and both the first synchronization resource and the second synchronization resource carry eight S-SSBs.

It should be understood that the method 800 may be used in combination with the method 200. For example, after the first device determines a first S-SSB resource and a second S-SSB resource, if first data may be further sent in the synchronization slot, the first device may perform the method 200. The method 200 includes: The first device sends indication information to a second device, where the indication information indicates whether a synchronization signal block is transmitted in a synchronization slot in which the first S-SSB resource is located, and/or indicates whether a synchronization signal block is transmitted in a synchronization slot in which the second S-SSB resource is located.

The foregoing mainly describes the communication methods provided in this application from a perspective of a terminal device. There is a correspondence between a processing process of a network device and that of the terminal device. For example, that the terminal device receives configuration information from the network device means that the network device sends the configuration information. That the terminal device sends information to the network device means that the network device receives the information from the terminal device. Therefore, even if the processing process of the network device is not clearly described in some parts above, a person skilled in the art may clearly understand the processing process of the network device based on the processing process of the terminal device.

The foregoing describes in detail the communication methods provided in this application. The following describes an embodiment of a new synchronization signal block provided in this application. It should be noted that the synchronization signal block in each of the foregoing methods is replaced with the new synchronization signal block described below. A first device generates the following synchronization signal block, and sends the synchronization signal block. Correspondingly, a second device receives the following synchronization signal block, and obtains a slot number and a system frame number from the synchronization signal block.

A time domain resource occupied by the new synchronization signal block provided in this application includes at least one PSSS symbol, at least one SSSS symbol, and at least two PSBCH symbols. The PSSS symbol is a symbol carrying a PSSS, and is referred to as a P symbol or P for short. The SSSS symbol is a symbol carrying an SSSS, and is referred to as an S symbol or S for short. The PSBCH symbol is a symbol carrying a PSBCH, and is referred to as a B symbol or B for short.

For ease of understanding, the new synchronization signal block is referred to as a first synchronization signal block. Unless otherwise specified, the first synchronization signal block described below is referred to as the new synchronization signal block.

The 1st symbol of the time domain resource occupied by the first synchronization signal block is the B symbol, and the last symbol of the time domain resource occupied by the first synchronization signal block is a gap.

Optionally, a quantity of B symbols is greater than or equal to that of P symbols.

The P symbol is adjacent to the S symbol, and an arrangement sequence of the P symbol and the S symbol is one of the following arrangement sequences: {P-S}, {P-P-S-S}, optionally {P-S-P-S}, optionally {P-P-S-S-S}, or optionally {P-P-P-S-S-S}, where "-" indicates that two symbols are adjacent in time domain.

Optionally, a subcarrier spacing of a frequency domain resource occupied by the first synchronization signal block is 15 kHz, and there is only the first synchronization signal block in a synchronization periodicity in which the first synchronization signal block is located; or

a subcarrier spacing of a frequency domain resource occupied by the first synchronization signal block is 30 kHz, and there is still another synchronization signal block in a synchronization periodicity in which the first synchronization signal block is located; or

a subcarrier spacing of a frequency domain resource occupied by the first synchronization signal block is 60 kHz, and there are still three other synchronization signal blocks in a synchronization periodicity in which the first synchronization signal block is located; or

a subcarrier spacing of a frequency domain resource occupied by the first synchronization signal block is 120 kHz, and there are still seven other synchronization signal blocks in a synchronization periodicity in which the first synchronization signal block is located.

Optionally, there is still a second synchronization signal block in the synchronization periodicity in which the first synchronization signal block is located. The first synchronization signal block and the second synchronization signal block have at least one of the following four features:

a quantity of B symbols in the time domain resource occupied by the first synchronization signal block is different from that of B symbols in a time domain resource occupied by the second synchronization signal block;

a spacing between the P symbol and the S symbol in the time domain resource occupied by the first synchronization signal block is different from that between a P symbol and an S symbol in the time domain resource occupied by the second synchronization signal block;

a sequence used by the P symbol in the time domain resource occupied by the first synchronization signal block is different from that used by the P symbol in the time domain resource occupied by the second synchronization signal block; or

a sequence used by the S symbol in the time domain resource occupied by the first synchronization signal block is different from that used by the S symbol in the time domain resource occupied by the second synchronization signal block.

Optionally, the first synchronization signal block and the second synchronization signal block are located in a same slot, and the first synchronization signal block and the second synchronization signal block are time division multiplexed in the slot.

The foregoing solution can help a receiver determine a source of a synchronization signal block.

Optionally, the time domain resource occupied by the first synchronization signal block includes one P symbol, one S symbol, and four or five B symbols.

Optionally, the arrangement sequence of the symbols in the time domain resource occupied by the first synchronization signal block is one of the following arrangement sequences:

> {B-P-B-B-B-S-B},
> {B-P-B-B-B-S-G},
> {B-P-B-B-B-S},
> {B-P-B-B-S-B}, or
> {B-P-B-B-S-G}, where
> G represents a gap, and "-" indicates that two symbols are adjacent in time domain.

Optionally, the time domain resource occupied by the first synchronization signal block includes two P symbols, two S symbols, and four or five B symbols.

Optionally, the arrangement sequence of the symbols in the time domain resource occupied by the first synchronization signal block is one of the following arrangement sequences:

> {B-P-B-B-B-S-B},
> {B-P-B-B-B-S-G},
> {B-P-S-B-B-B-B},
> {B-P-S-B-B-B-G},
> {B-P-B-B-B-S},
> {B-P-B-B-S-B},
> {B-P-B-B-S-G},
> {B-P-S-B-B-B}, or
> {B-P-S-B-B-G}, where

G represents a gap, and "-" indicates that two symbols are adjacent in time domain.

Optionally, the time domain resource occupied by the first synchronization signal block includes two or three P symbols, two or three S symbols, and six, seven, or eight B symbols.

The first synchronization signal block including eight B symbols may be used in a scenario in which a PSBCH bandwidth is 20 PRBs.

The arrangement sequence of the symbols in the time domain resource occupied by the first synchronization signal block is {B-P-P-S-S-B-B-B-B-B-B-G}. Optionally, the arrangement sequence of the symbols in the time domain resource occupied by the first synchronization signal block is one of the following arrangement sequences:

> {B-P-P-B-B-B-S-S-B},
> {B-P-P-B-B-B-S-S-G},
> {B-P-P-S-S-B-B-B-B},
> {B-P-P-S-S-B-B-B-G},
> {B-P-P-B-B-B-B-S-S-B},
> {B-P-P-B-B-B-B-S-S-G}, or
> {B-P-P-S-S-B-B-B-B-B-B},
> where
> G represents a gap, and "-" indicates that two symbols are adjacent in time domain.

Optionally, a quantity of frequency domain resource blocks occupied by the P symbol, the S symbol, or the B symbol in the first synchronization signal block is one of the following: 11, 12, or 20.

Optionally, lengths of a P sequence and an S sequence of the first synchronization signal block are both 127 bits.

Optionally, the first device generates the control information of the first synchronization signal block in a CP-OFDM manner, where there is a demodulation reference signal DMRS with an equal spacing in frequency domain on a symbol in which the control information of the first synchronization signal block is located.

Optionally, a type of a CP of the synchronization signal block is a normal CP or an extended CP.

Optionally, there is still sidelink control information in the slot in which the first synchronization signal block is located. The sidelink control information and the first synchronization signal block are time division multiplexed in the slot in which the first synchronization signal block is located, and the sidelink control information includes control information used to indicate transmission or control information used to indicate feedback.

Optionally, a structure of the first synchronization signal block varies with different subcarrier spacings, and the structure of the first synchronization signal block includes quantities of P symbols, S symbols, and B symbols and relative arrangement sequences of the P symbol, the S symbol, and the B symbol.

Optionally, that the structure of the first synchronization signal block varies with different subcarrier spacings includes:

the quantity of P symbols in the first synchronization signal block with a subcarrier spacing of 15 kHz is greater than a quantity of P symbols in the first synchronization signal block with another subcarrier spacing; and/or

the quantity of S symbols in the first synchronization signal block with a subcarrier spacing of 15 kHz is greater than a quantity of S symbols in the first synchronization signal block with another subcarrier spacing; and/or
the quantity of S symbols in the first synchronization signal block with a subcarrier spacing of 15 kHz is greater than a quantity of S symbols in the first synchronization signal block with another subcarrier spacing.

The foregoing describes in detail examples of the communication method according to this application. It may be understood that, to implement the foregoing functions, the communications apparatus includes corresponding hardware structures and/or software modules for performing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the communications apparatus may be divided into function units based on the foregoing method examples. For example, each function unit may be obtained through division, or two or more functions may be integrated into one processing unit. The integrated unit may be implemented in a form of hardware, or may be implemented in a form of a software function unit. It needs to be noted that, in this application, unit division is an example, and is merely a logical function division. During actual implementation, another division manner may be used.

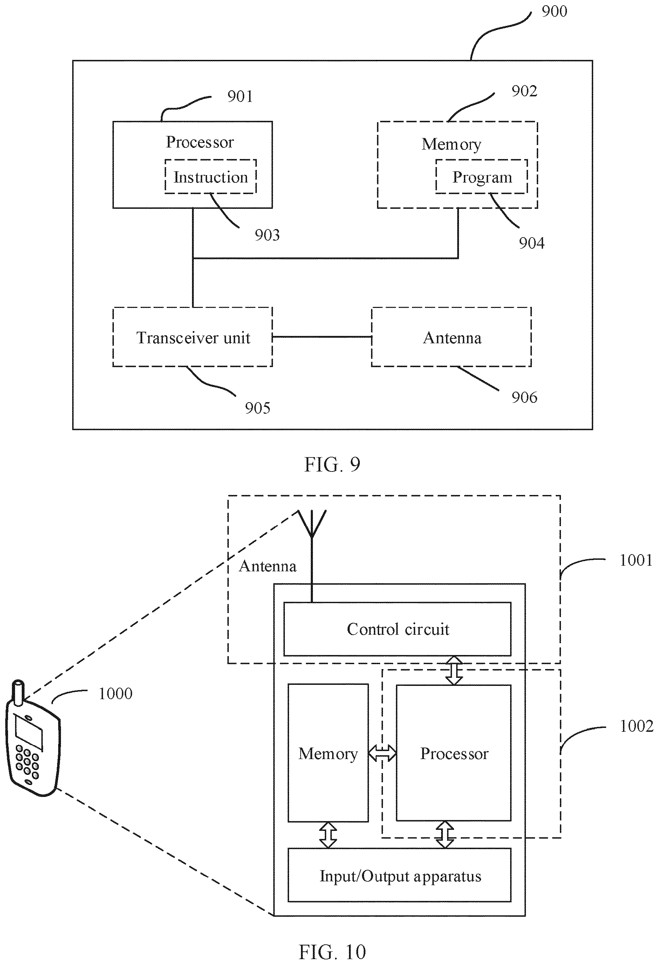

FIG. 9 is a schematic structural diagram of a communications apparatus according to this application. The communications apparatus 900 may be configured to implement the methods described in the foregoing method embodiments. The communications apparatus 900 may be a chip, a network device, or a terminal device.

The communications apparatus 900 includes one or more processors 901. The one or more processors 901 may support the communications apparatus 900 in implementing the method in the method embodiment shown in FIG. 3. The processor 901 may be a general-purpose processor or a special-purpose processor. For example, the processor 901 may be a central processing unit (central processing unit, CPU) or a baseband processor. The baseband processor may be configured to process communication data (for example, a power consumption reduction signal described above). The CPU may be configured to: control a communications apparatus (for example, a network device, a terminal device, or a chip), execute a software program, and process data of the software program. The communications apparatus 900 may include a transceiver unit 905 that is configured to input (receive) and output (send) a signal.

For example, the communications apparatus 900 may be a chip, and the transceiver unit 905 may be an input and/or output circuit of the chip. Alternatively, the transceiver unit 905 may be a communications interface of the chip, and the chip may be used as a component of a terminal device, a network device, or another wireless communications device.

The communications apparatus 900 may include one or more memories 902. The memory 902 stores a program 904, and the program 904 may be run by the processor 901 to generate an instruction 903, so that the processor 901 performs, according to the instruction 903, the methods described in the foregoing method embodiments. Optionally, the memory 902 may further store data. Optionally, the processor 901 may further read data stored in the memory 902. The data and the program 904 may be stored at a same storage address, or the data and the program 904 may be stored at different storage addresses.

The processor 901 and the memory 902 may be disposed separately, or may be integrated together, for example, integrated on a board or integrated into a system on chip (system on chip, SOC).

The communications apparatus 900 may further include the transceiver unit 905 and an antenna 906. The transceiver unit 905 may be referred to as a transceiver, a transceiver circuit, or a transceiver machine, and is configured to implement a transceiver function of the communications apparatus through the antenna 906.

In a possible design, the processor 901 is configured to perform the following operations through the transceiver unit 905 and the antenna 906:

sending indication information, where the indication information is used to indicate whether a first device sends a first synchronization signal block in a synchronization slot of a sidelink, and the synchronization slot is used to transmit a synchronization signal block; and
sending first data in the synchronization slot of the sidelink.

In another possible design, the processor 901 is configured to perform the following operations through the transceiver unit 905 and the antenna 906:

receiving indication information from a first device, where the indication information is used to indicate whether the first device sends a first synchronization signal block in a synchronization slot of a sidelink, and the synchronization slot is used to transmit a synchronization signal block; and

receiving first data from the first device in the synchronization slot of the sidelink.

In another possible design, the processor 901 is configured to perform the following operations through the transceiver unit 905 and the antenna 906:

obtaining first configuration information and second configuration information, where the first configuration information is used to configure a first synchronization signal block resource and a second synchronization signal block resource of a sidelink, the second configuration information is used to configure a data resource of the sidelink, and the resources configured by using the first configuration information partially overlap, in time domain, the resource configured by using the second configuration information;

determining a target data resource based on the first configuration information and the second configuration information, where the target data resource belongs to the data resource of the sidelink, and the target data resource does not overlap the resources configured by using the first configuration information in time domain; and

sending or receiving sidelink data on the target data resource.

In another possible design, the processor 901 is configured to perform the following operations through the transceiver unit 905 and the antenna 906:

obtaining synchronization resource configuration information, where the synchronization resource configuration information is used to configure a first synchronization resource and a second synchronization resource of a sidelink, and the first synchronization resource and the second synchronization resource occupy a portion of symbols in a synchronization slot; and

sending a first synchronization signal block on the first synchronization resource, and receiving a second synchronization signal block on the second synchronization resource; or receiving a first synchronization signal block on the first synchronization resource, and sending a second synchronization signal block on the second synchronization resource.

In another possible design, the processor 901 is configured to perform the following operations through the transceiver unit 905 and the antenna 906:

generating synchronization resource configuration information, where the synchronization resource configuration information is used to configure a first synchronization resource and a second synchronization resource of a sidelink, and the first synchronization resource and the second synchronization resource occupy a portion of symbols in a synchronization slot; and

sending the synchronization resource configuration information.

In another possible design, the processor 901 is configured to perform the following operations through the transceiver unit 905 and the antenna 906:

generating a first synchronization signal block, where a time domain resource occupied by the first synchronization signal block includes at least one primary synchronization signal P symbol, at least one secondary synchronization signal S symbol, and at least two control information B symbols; and sending the first synchronization signal block.

In another possible design, the processor 901 is configured to perform the following operations through the transceiver unit 905 and the antenna 906:

receiving a first synchronization signal block, where a time domain resource occupied by the first synchronization signal block includes at least one primary synchronization signal P symbol, at least one secondary synchronization signal S symbol, and at least two control information B symbols; and obtaining a slot number and a system frame number based on the first synchronization signal block.

For specific implementations of the foregoing possible designs, refer to related descriptions in the foregoing method embodiments.

It should be understood that steps in the foregoing method embodiments may be implemented by using a logic circuit in a form of hardware or an instruction in a form of software in the processor 901. The processor 901 may be a CPU, a digital signal processor (digital signal processor, DSP), an application-specific integrated circuit (application-specific integrated circuit, ASIC), a field programmable gate array (field programmable gate array, FPGA), or another programmable logic device, for example, a discrete gate, a transistor logic device, or a discrete hardware component.

This application further provides a computer program product. When the computer program product is executed by the processor 901, the communication method according to any one of the method embodiments of this application is implemented.

The computer program product may be stored in the memory 902. For example, the computer program product is a program 904. After processing processes such as preprocessing, compilation, assembly, and linking, the program 904 is finally converted into an executable target file that can be executed by the processor 901.

This application further provides a computer-readable storage medium. The computer-readable storage medium stores a computer program. When the computer program is executed by a computer, the communication method according to any one of the method embodiments of this application is implemented. The computer program may be a high-level language program, or may be an executable target program.

The computer-readable storage medium is, for example, the memory 902. The memory 902 may be a volatile memory or a nonvolatile memory, or the memory 902 may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

When the communications apparatus 900 is a terminal device, FIG. 10 is a schematic structural diagram of a terminal device according to this application. The terminal device 1000 may be applicable to the system shown in FIG. 1, to implement a function of the first device or the second device in the foregoing method embodiments. For ease of description, FIG. 10 shows only main components of the terminal device.

As shown in FIG. 10, the terminal device 1000 includes a processor, a memory, a control circuit, an antenna, and an input/output apparatus. The processor is mainly configured to: process a communication protocol and communication data, and control the entire terminal device. For example, the processor receives a power consumption reduction signal by using the antenna and the control circuit. The memory is mainly configured to store a program and data, for example, store a communication protocol and to-be-sent data. The control circuit is mainly configured to: perform switching between a baseband signal and a radio frequency signal, and process the radio frequency signal. The control circuit, together with the antenna, may also be referred to as a transceiver that is mainly configured to send and receive a radio frequency signal in an electromagnetic wave form. The input/output apparatus, such as a touchscreen or a keyboard, is mainly configured to: receive data input by a user, and output data to the user.

After the terminal device is powered on, the processor may read a program in the memory, interpret and execute an instruction included in the program, and process data in the program. When information needs to be sent through the antenna, the processor performs baseband processing on the to-be-sent information, and outputs a baseband signal to a radio frequency circuit. The radio frequency circuit performs radio frequency processing on the baseband signal to obtain a radio frequency signal, and sends the radio frequency signal in an electromagnetic wave form through the antenna. When an electromagnetic wave (namely, the radio frequency signal) carrying information arrives at the terminal device, the radio frequency circuit receives the radio frequency signal through the antenna, converts the radio frequency signal into the baseband signal, and outputs the baseband signal to the processor. The processor converts the baseband signal into the information, and processes the information.

A person skilled in the art may understand that for ease of description, FIG. 10 shows only one memory and only one processor. In an actual terminal device, there may be a plurality of processors and a plurality of memories. The memory may also be referred to as a storage medium, a storage device, or the like. This is not limited in this application.

In an optional implementation, the processor in FIG. 10 may integrate functions of the baseband processor and the CPU. A person skilled in the art may understand that the baseband processor and the CPU may alternatively be respectively independent processors, and are interconnected by using technologies such as a bus. A person skilled in the art may understand that the terminal device may include a plurality of baseband processors to adapt to different network standards, the terminal device may include a plurality of CPUs to improve a processing capability of the terminal device, and the components of the terminal device may be connected by using various buses. The baseband processor may also be referred to as a baseband processing circuit or a baseband processing chip. The CPU may also be referred to as a central processing circuit or a central processing chip. A function of processing the communication protocol and the communication data may be embedded into the processor, or may be stored in the memory in a form of a program, so that the processor executes the program in the memory to implement a baseband processing function.

In this application, the antenna and the control circuit that have sending and receiving functions may be considered as a transceiver unit 1001 of the terminal device 1000. The transceiver unit 1001 is configured to support the terminal device in implementing the receiving function in the method embodiments, or is configured to support the terminal device in implementing the sending function in the method embodiments. The processor having a processing function is considered as a processing unit 1002 of the terminal device 1000. As shown in FIG. 10, the terminal device 1000 includes the transceiver unit 1001 and the processing unit 1002. The transceiver unit may also be referred to as a transceiver machine, a transceiver, a transceiver apparatus, or the like. Optionally, a device configured to implement the receiving function in the transceiver unit 1001 may be considered as a receiving unit. A device configured to implement the sending function in the transceiver unit 1001 may be considered as a sending unit. In other words, the transceiver unit 1001 includes the receiving unit and the sending unit. The receiving unit may also be referred to as a receiver, an input port, a receiving circuit, or the like. The sending unit may be referred to as a transmitter, a transmitter machine, a transmitting circuit, or the like.

The processor 1002 may be configured to execute a program stored in the memory, to control the transceiver unit 1001 to receive a signal and/or send a signal, to complete a function of the terminal device in the foregoing method embodiments. In an implementation, a function of the transceiver unit 1001 may be implemented through a transceiver circuit or a transceiver-dedicated chip.

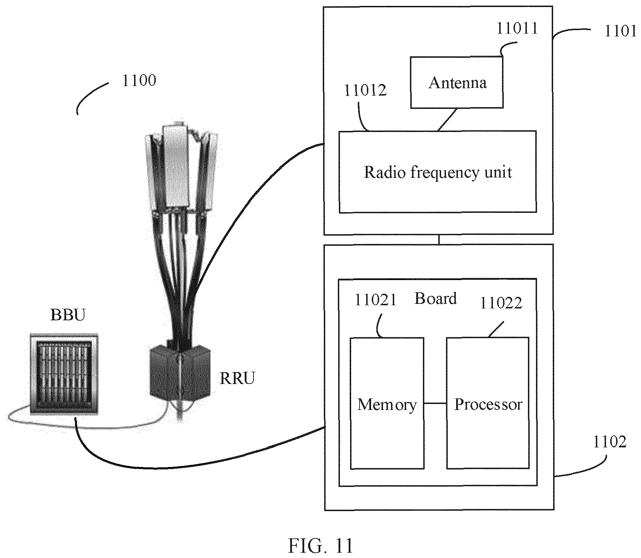

When the communications apparatus 900 is a network device, FIG. 11 is a schematic structural diagram of a network device according to this application. The network device may be, for example, a base station. As shown in FIG. 11, the base station may be applied to the system shown in FIG. 1, to implement a function of the network device in the foregoing method embodiments. The base station 1100 may include one or more radio frequency units, for example, a remote radio unit (remote radio unit, RRU) 1101 and at least one baseband unit (baseband unit, BBU) 1102. The BBU 1102 may include a distributed unit (distributed unit, DU), or may include a DU and a central unit (central unit, CU).

The RRU 1101 may be referred to as a transceiver unit, a transceiver, a transceiver circuit, or a transceiver machine, and may include at least one antenna 11011 and a radio frequency unit 11012. The RRU 1101 is mainly configured to perform receiving and sending of a radio frequency signal and switching between a radio frequency signal and a baseband signal, for example, configured to support the base station in implementing a sending function and a receiving function in the method embodiments. The BBU 1102 is mainly configured to: perform baseband processing, control the base station, and the like. The RRU 1101 and the BBU 1102 may be physically disposed together, or may be physically separated, namely, a distributed base station.

The BBU 1102 may also be referred to as a processing unit, and is mainly configured to complete a baseband processing function such as channel coding, multiplexing, modulation, or spreading. For example, the BBU 1102 may be configured to control the base station to perform an operation procedure related to the network device in the foregoing method embodiments.

The BBU 1102 may include one or more boards. A plurality of boards may jointly support a radio access network (for example, a long term evolution (long term evolution, LTE) network) of a single access standard, or may separately support radio access networks (for example, an LTE network and an NR network) of different access standards. The BBU 1102 further includes a memory 11021 and a processor 11022. The memory 11021 is configured to store a necessary instruction and necessary data. For example, the memory 11021 stores the power consumption reduction signal in the foregoing method embodiments. The processor 11022 is configured to control the base station to perform a necessary action, for example, is configured to control the base station to perform the operation procedure in the foregoing method embodiments. The memory 11021 and the processor 11022 may serve one or more boards. That is, the memory and the processor may be independently disposed on each board. Alternatively, a plurality of boards may share a same memory and a same processor. In addition, each board may further be provided with a necessary circuit.

It may be clearly understood by a person skilled in the art that, for the purpose of convenient and brief description, for detailed working processes of the foregoing system, apparatus, and unit, refer to corresponding processes in the foregoing method embodiments, and details are not described herein again.

In the several embodiments provided in this application, the disclosed system, apparatus and method may be implemented in other manners. For example, some features of the method embodiments described above may be ignored or not performed. The described apparatus embodiments are merely examples. For example, the division into units is merely logical function division and may be other division during actual implementation. For example, a plurality of units or components may be combined or integrated into another system. In addition, a coupling between the units or a coupling between the components may be a direct coupling, or may be an indirect coupling. The foregoing coupling includes an electrical connection, a mechanical connection, or a connection in another form.

It needs to be understood that sequence indexes of the foregoing processes do not mean execution sequences in the various embodiments of this application. The execution sequences of the processes need to be determined based on functions and internal logic of the processes, and do not need to be construed as any limitation on the implementation processes of the embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

## Claims

1. A communication method, comprising:

    generating, by a first terminal device, a first synchronization signal block, wherein the first synchronization signal block comprises a sidelink primary synchronization signal, SPSS, a sidelink secondary synchronization signal, SSSS, and a physical sidelink broadcast channel, PSBCH, a time domain resource occupied by the first synchronization signal block comprises two P symbols carrying the SPSS, two S symbols carrying the SSSS and at least two B symbols carrying the PSBCH, an arrangement sequence of the two P symbols and the two S symbols is P-P-S-S, wherein - indicates two symbols are adjacent in time domain, an arrangement sequence of the symbols in the time domain resource occupied by the first synchronization signal block is B-P-P-S-S-B-B-B-B-B-B-G, G is a gap symbol;
    sending, by the first terminal device, the first synchronization signal block to a second terminal device.

2. The method according to claim 1, wherein

    a subcarrier spacing of a frequency domain resource occupied by the first synchronization signal block is 15 kHz, a synchronization periodicity in which the first synchronization signal block is located has only one first synchronization signal block; or
    a subcarrier spacing of a frequency domain resource occupied by the first synchronization signal block is 30 kHz, a synchronization periodicity in which the first synchronization signal block is located has only two first synchronization signal blocks; or
    a subcarrier spacing of a frequency domain resource occupied by the first synchronization signal block is 60 kHz, a synchronization periodicity in which the first synchronization signal block is located has only four first synchronization signal blocks; or
    a subcarrier spacing of a frequency domain resource occupied by the first synchronization signal block is 120 kHz, a synchronization periodicity in which the first synchronization signal block is located has only eight first synchronization signal blocks.

3. The method according to claim 1, wherein a sequence length of a symbol carrying the sidelink primary synchronization signal, and a sequence length of a symbol carrying the sidelink secondary synchronization signal are both 127 bits.

4. The method according to claim 1, wherein a quantity of frequency domain resource blocks occupied by the P symbol, the S symbol, or the B symbol is 11.

5. The method according to claim 1, wherein a type of a cyclic prefix, CP, of the first synchronization signal block is a normal CP or an extended CP.

6. A communication method, comprising:

    receiving, by a second terminal device, a first synchronization signal block from a first terminal device, wherein the first synchronization signal block comprises a sidelink primary synchronization signal, SPSS, a sidelink secondary synchronization signal, SSSS, and a physical sidelink broadcast channel, PSBCH, a time domain resource occupied by the first synchronization signal block comprises two P symbols carrying the SPSS, two S symbols carrying the SSSS and at least two B symbols carrying the PSBCH, an arrangement sequence of the two P symbols and the two S symbols is P-P-S-S, wherein - indicates two symbols are adjacent in time domain, an arrangement sequence of the symbols in the time domain resource occupied by the first synchronization signal block is B-P-P-S-S-B-B-B-B-B-B-G, G is a gap symbol;
    obtaining, by the second terminal device, a slot number and a system frame number according to the first synchronization signal block.

7. The method according to claim 6, wherein

    a subcarrier spacing of a frequency domain resource occupied by the first synchronization signal block is 15 kHz, a synchronization periodicity in which the first synchronization signal block is located has only one first synchronization signal block; or
    a subcarrier spacing of a frequency domain resource occupied by the first synchronization signal block is 30 kHz, a synchronization periodicity in which the first synchronization signal block is located has only two first synchronization signal blocks; or
    a subcarrier spacing of a frequency domain resource occupied by the first synchronization signal block is 60 kHz, a synchronization periodicity in which the first synchronization signal block is located has only four first synchronization signal blocks; or
a subcarrier spacing of a frequency domain resource occupied by the first synchronization signal block is 120 kHz, a synchronization periodicity in which the first synchronization signal block is located has only eight first synchronization signal blocks.

8. The method according to claim 6, wherein a sequence length of a symbol carrying the sidelink primary synchronization signal, and a sequence length of a symbol carrying the sidelink secondary synchronization signal are both 127 bits.

9. The method according to claim 6, wherein a quantity of frequency domain resource blocks occupied by the P symbol, the S symbol, or the B symbol is 11.

10. The method according to claim 6, wherein a type of a cyclic prefix, CP, of the first synchronization signal block is a normal CP or an extended CP.

11. A first terminal device, configured to implement the method steps as claimed in any one of claims 1 to 5.

12. A second terminal device, configured to implement the method steps as claimed in any one of claims 6 to 10.

13. A computer program comprising instructions, wherein when executed by a communications apparatus, the instructions cause the communications apparatus to perform the method according to any one of claims 1 to 5 or claims 6 to 10.

14. A computer-readable storage medium comprising instructions, wherein when executed by a communications apparatus, the instructions cause the communications apparatus to perform the method according to any one of claims 1 to 5 or claims 6 to 10.

**Patentansprüche**

1. Kommunikationsverfahren, umfassend:

Generieren, durch eine erste Endgerätvorrichtung, eines ersten Synchronisierungssignalblocks, wobei der erste Synchronisierungssignalblock ein primäres Sidelink-Synchronisierungssignal, SPSS, ein sekundäres Sidelink-Synchronisierungssignal, SSSS, und einen physischen Sidelink-Broadcast-Kanal, PSBCH, umfasst, eine durch den ersten Synchronisierungssignalblock belegte Zeitbereichsressource zwei P-Symbole, die das SPSS transportieren, zwei S-Symbole, die das SSSS transportieren, und mindestens zwei B-Symbole, die den PSBCH transportieren, umfasst, eine Anordnungssequenz der zwei P-Symbole und der zwei S-Symbole P-P-S-S ist, wobei - angibt, dass zwei Symbole in dem Zeitbereich benachbart sind, eine Anordnungssequenz der Symbole in der durch den ersten Synchronisierungssignalblock belegten Zeitbereichsressource BP-P-S-S-B-B-B-B-B-B-G ist und G ein Lückensymbol ist;
Senden, durch die erste Endgerätvorrichtung, des ersten Synchronisierungssignalblocks an eine zweite Endgerätvorrichtung.

2. Verfahren nach Anspruch 1, wobei

ein Unterträgerabstand einer durch den ersten Synchronisierungssignalblock belegten Frequenzbereichsressource 15 kHz beträgt und eine Synchronisierungsperiodizität, in der sich der erste Synchronisierungssignalblock befindet, nur einen ersten Synchronisierungssignalblock aufweist; oder
ein Unterträgerabstand einer durch den ersten Synchronisierungssignalblock belegten Frequenzbereichsressource 30 kHz beträgt und eine Synchronisierungsperiodizität, in der sich der erste Synchronisierungssignalblock befindet, nur zwei erste Synchronisierungssignalblöcke aufweist; oder
ein Unterträgerabstand einer durch den ersten Synchronisierungssignalblock belegten Frequenzbereichsressource 60 kHz beträgt und eine Synchronisierungsperiodizität, in der sich der erste Synchronisierungssignalblock befindet, nur vier erste Synchronisierungssignalblöcke aufweist; oder
ein Unterträgerabstand einer durch den ersten Synchronisierungssignalblock belegten Frequenzbereichsressource 120 kHz beträgt und eine Synchronisierungsperiodizität, in der sich der erste Synchronisierungssignalblock befindet, nur acht erste Synchronisierungssignalblöcke aufweist.

3. Verfahren nach Anspruch 1, wobei eine Sequenzlänge eines das primäre Sidelink-Synchronisierungssignal transportierenden Symbols und eine Sequenzlänge eines das sekundäre Sidelink-Synchronisierungssignal transportierenden Symbols jeweils 127 Bit beträgt.

4. Verfahren nach Anspruch 1, wobei eine Anzahl der durch das P-Symbol, das S-Symbol oder das B-Symbol belegten Frequenzbereichsressourcenblöcke 11 beträgt.

**5.** Verfahren nach Anspruch 1, wobei
ein Typ eines zyklischen Präfixes, CP, des ersten Synchronisierungssignalblocks ein normales CP oder ein erweitertes CP ist.

**6.** Kommunikationsverfahren, umfassend:

Empfangen, durch eine zweite Endgerätvorrichtung, eines ersten Synchronisierungssignalblocks von einer ersten Endgerätvorrichtung, wobei der erste Synchronisierungssignalblock ein primäres Sidelink-Synchronisierungssignal, SPSS, ein sekundäres Sidelink-Synchronisierungssignal, SSSS, und einen physischen Sidelink-Broadcast-Kanal, PSBCH, umfasst, eine durch den ersten Synchronisierungssignalblock belegte Zeitbereichsressource zwei P-Symbole, die das SPSS transportieren, zwei S-Symbole, die das SSSS transportieren, und mindestens zwei B-Symbole, die den PSBCH transportieren, umfasst, eine Anordnungssequenz der zwei P-Symbole und der zwei S-Symbole P-P-S-S ist, wobei - angibt, dass zwei Symbole in dem Zeitbereich benachbart sind, eine Anordnungssequenz der Symbole in der durch den ersten Synchronisierungssignalblock belegten Zeitbereichsressource BP-P-S-S-B-B-B-B-B-B-G ist und G ein Lückensymbol ist;
Erlangen, durch die zweite Endgerätvorrichtung, einer Schlitznummer und einer Systemframenummer gemäß dem ersten Synchronisierungssignalblock.

**7.** Verfahren nach Anspruch 6, wobei

ein Unterträgerabstand einer durch den ersten Synchronisierungssignalblock belegten Frequenzbereichsressource 15 kHz beträgt und eine Synchronisierungsperiodizität, in der sich der erste Synchronisierungssignalblock befindet, nur einen ersten Synchronisierungssignalblock aufweist; oder
ein Unterträgerabstand einer durch den ersten Synchronisierungssignalblock belegten Frequenzbereichsressource 30 kHz beträgt und eine Synchronisierungsperiodizität, in der sich der erste Synchronisierungssignalblock befindet, nur zwei erste Synchronisierungssignalblöcke aufweist; oder
ein Unterträgerabstand einer durch den ersten Synchronisierungssignalblock belegten Frequenzbereichsressource 60 kHz beträgt und eine Synchronisierungsperiodizität, in der sich der erste Synchronisierungssignalblock befindet, nur vier erste Synchronisierungssignalblöcke aufweist; oder
ein Unterträgerabstand einer durch den ersten Synchronisierungssignalblock belegten Frequenzbereichsressource 120 kHz beträgt und eine Synchronisierungsperiodizität, in der sich der erste Synchronisierungssignalblock befindet, nur acht erste Synchronisierungssignalblöcke aufweist.

**8.** Verfahren nach Anspruch 6, wobei
eine Sequenzlänge eines das primäre Sidelink-Synchronisierungssignal transportierenden Symbols und eine Sequenzlänge eines das sekundäre Sidelink-Synchronisierungssignal transportierenden Symbols jeweils 127 Bit beträgt.

**9.** Verfahren nach Anspruch 6, wobei
eine Anzahl der durch das P-Symbol, das S-Symbol oder das B-Symbol belegten Frequenzbereichsressourcenblöcke 11 beträgt.

**10.** Verfahren nach Anspruch 6, wobei
ein Typ eines zyklischen Präfixes, CP, des ersten Synchronisierungssignalblocks ein normales CP oder ein erweitertes CP ist.

**11.** Erste Endgerätvorrichtung, die dazu konfiguriert ist, die Verfahrensschritte nach einem der Ansprüche 1 bis 5 umzusetzen.

**12.** Zweite Endgerätvorrichtung, die dazu konfiguriert ist, die Verfahrensschritte nach einem der Ansprüche 6 bis 10 umzusetzen.

**13.** Computerprogramm, umfassend Anweisungen, wobei die Anweisungen bei Ausführung durch eine Kommunikationseinrichtung bewirken, dass die Kommunikationseinrichtung das Verfahren nach einem der Ansprüche 1 bis 5 oder der Ansprüche 6 bis 10 durchführt.

**14.** Computerlesbares Speichermedium, umfassend Anweisungen, wobei die Anweisungen bei Ausführung durch eine Kommunikationseinrichtung bewirken, dass die Kommunikationseinrichtung das Verfahren nach einem der Ansprüche 1 bis 5 oder der Ansprüche 6 bis 10 durchführt.

**Revendications**

**1.** Procédé de communication, comprenant :

la génération, par un premier dispositif terminal, d'un premier bloc de signal de synchronisation, dans lequel le premier bloc de signal de synchronisation comprend un signal de synchronisation primaire de liaison latérale, SPSS, un signal de synchronisation secondaire de liaison latérale, SSSS, et un canal de diffusion de liaison latérale physique, PSBCH, une ressource de domaine temporel occupée par le premier bloc de signal de synchronisation comprend deux symboles P transportant le SPSS, deux symboles S transportant le SSSS et au moins deux symboles B transportant le PSBCH, une séquence d'agencement des deux symboles P et des deux symboles S est P-P-S-S, dans lequel - indique que deux symboles sont adjacents dans le domaine temporel, une séquence d'agencement des symboles dans la ressource de domaine temporel occupée par le premier bloc de signal de synchronisation est B-P-P-S-S-B-B-B-B-B-G, G est un symbole d'intervalle ;

l'envoi, par le premier dispositif terminal, du premier bloc de signal de synchronisation à un second dispositif terminal.

**2.** Procédé selon la revendication 1, dans lequel

un espacement de sous-porteuses d'une ressource de domaine fréquentiel occupée par le premier bloc de signal de synchronisation est de 15 kHz, une périodicité de synchronisation dans laquelle se trouve le premier bloc de signal de synchronisation n'a qu'un seul premier bloc de signal de synchronisation ; ou
un espacement de sous-porteuses d'une ressource de domaine fréquentiel occupée par le premier bloc de signal de synchronisation est de 30 kHz, une périodicité de synchronisation dans laquelle se trouve le premier bloc de signal de synchronisation n'a que deux premiers blocs de signal de synchronisation ; ou
un espacement de sous-porteuses d'une ressource de domaine fréquentiel occupée par le premier bloc de signal de synchronisation est de 60 kHz, une périodicité de synchronisation dans laquelle se trouve le premier bloc de signal de synchronisation n'a que quatre premiers blocs de signal de synchronisation ; ou
un espacement de sous-porteuses d'une ressource de domaine fréquentiel occupée par le premier bloc de signal de synchronisation est de 120 kHz, une périodicité de synchronisation dans laquelle se trouve le premier bloc de signal de synchronisation n'a que huit premiers blocs de signal de synchronisation.

**3.** Procédé selon la revendication 1, dans lequel une longueur de séquence d'un symbole transportant le signal de synchronisation primaire de liaison latérale, et une longueur de séquence d'un symbole transportant le signal de synchronisation secondaire de liaison latérale sont toutes deux de 127 bits.

**4.** Procédé selon la revendication 1, dans lequel une quantité de blocs de ressources de domaine fréquentiel occupés par le symbole P, le symbole S ou le symbole B est de 11.

**5.** Procédé selon la revendication 1, dans lequel un type de préfixe cyclique, CP, du premier bloc de signal de synchronisation est un CP normal ou un CP étendu.

**6.** Procédé de communication, comprenant :

la réception, par un second dispositif terminal, d'un premier bloc de signal de synchronisation à partir d'un premier dispositif terminal, dans lequel le premier bloc de signal de synchronisation comprend un signal de synchronisation primaire de liaison latérale, SPSS, un signal de synchronisation secondaire de liaison latérale, SSSS, et un canal de diffusion de liaison latérale physique, PSBCH, une ressource de domaine temporel occupée par le premier bloc de signal de synchronisation comprend deux symboles P transportant le SPSS, deux symboles S transportant le SSSS et au moins deux symboles B transportant le PSBCH, une séquence d'agencement des deux symboles P et des deux symboles S est P-P-S-S, dans lequel - indique que deux symboles sont adjacents dans le domaine temporel, une séquence d'agencement des symboles dans la ressource de domaine temporel occupée par le premier bloc de signal de synchronisation est B-P-P-S-S-B-B-B-B-B-G, G est un symbole d'intervalle ;
l'obtention, par le second dispositif terminal, d'un numéro d'emplacement et d'un numéro de trame système selon le premier bloc de signal de synchronisation.

**7.** Procédé selon la revendication 6, dans lequel

un espacement de sous-porteuses d'une ressource de domaine fréquentiel occupée par le premier bloc de signal de synchronisation est de 15 kHz, une périodicité de synchronisation dans laquelle se trouve le premier bloc de signal de synchronisation n'a qu'un seul premier bloc de signal de synchronisation ; ou
un espacement de sous-porteuses d'une ressource de domaine fréquentiel occupée par le premier bloc de signal de synchronisation est de 30 kHz, une périodicité de synchronisation dans laquelle se trouve le premier bloc de signal de synchronisation n'a que deux premiers blocs de signal de synchronisation ; ou
un espacement de sous-porteuses d'une ressource de domaine fréquentiel occupée par le premier bloc de signal de synchronisation est de 60 kHz, une périodicité de synchronisation dans laquelle se trouve le premier bloc de signal de synchronisation n'a que quatre premiers blocs de signal de synchronisation ; ou un espacement de sous-porteuses d'une ressource de domaine fréquentiel occupée par le premier bloc de signal de synchronisation est de 120 kHz, une périodicité de synchronisation dans laquelle se trouve le premier bloc de signal de synchronisation n'a que huit premiers blocs de signal de synchronisation.

8. Procédé selon la revendication 6, dans lequel une longueur de séquence d'un symbole transportant le signal de synchronisation primaire de liaison latérale, et une longueur de séquence d'un symbole transportant le signal de synchronisation secondaire de liaison latérale sont toutes deux de 127 bits.

9. Procédé selon la revendication 6, dans lequel une quantité de blocs de ressources de domaine fréquentiel occupés par le symbole P, le symbole S ou le symbole B est de 11.

10. Procédé selon la revendication 6, dans lequel un type de préfixe cyclique, CP, du premier bloc de signal de synchronisation est un CP normal ou un CP étendu.

11. Premier dispositif terminal, configuré pour mettre en œuvre les étapes de procédé selon l'une quelconque des revendications 1 à 5.

12. Second dispositif terminal, configuré pour mettre en œuvre les étapes de procédé selon l'une quelconque des revendications 6 à 10.

13. Programme informatique comprenant des instructions, dans lequel lorsqu'elles sont exécutées par un appareil de communication, les instructions amènent l'appareil de communication à exécuter le procédé selon l'une quelconque des revendications 1 à 5 ou des revendications 6 à 10.

14. Support de stockage lisible par ordinateur comprenant des instructions, dans lequel lorsqu'elles sont exécutées par un appareil de communication, les instructions amènent l'appareil de communication à exécuter le procédé selon l'une quelconque des revendications 1 à 5 ou des revendications 6 à 10.

FIG. 1

FIG. 2

| PSBCH | PSSS | PSBCH | SSSS | PSBCH | GAP | D | D | D | D | D | D | GAP |
|---|---|---|---|---|---|---|---|---|---|---|---|---|

FIG. 3

| PSBCH | PSSS | PSBCH | SSSS | PSBCH | D | D | D | D | D | D | D | GAP |
|-------|------|-------|------|-------|---|---|---|---|---|---|---|-----|

FIG. 4

500

| A first device obtains first configuration information and second configuration information, where the first configuration information is used to configure a first synchronization signal block resource and a second synchronization signal block resource of a sidelink, the second configuration information is used to configure a data resource of the sidelink, and the resources configured by using the first configuration information partially overlap, in time domain, the resource configured by using the second configuration information | — S510 |

| The first device determines a target data resource based on the first configuration information and the second configuration information, where the target data resource belongs to the data resource of the sidelink, and the target data resource does not overlap the resources configured by using the first configuration information in time domain | — S520 |

| The first device sends or receives sidelink data on the target data resource | — S530 |

FIG. 5

Slot

| First S-SSB resource | | Second S-SSB resource |

FIG. 6

First S-SSB resource  Second S-SSB resource

FIG. 7

800

| A first device obtains synchronization resource configuration information, where the synchronization resource configuration information is used to configure a first synchronization resource and a second synchronization resource of a sidelink, and the first synchronization resource and the second synchronization resource occupy a portion of symbols in a synchronization slot | S810 |

| The first device sends a first synchronization signal block on the first synchronization resource, and receives a second synchronization signal block on the second synchronization resource; or the first device receives a first synchronization signal block on the first synchronization resource, and sends a second synchronization signal block on the second synchronization resource | S820 |

FIG. 8

900

901

Processor

Instruction

903

902

Memory

Program

904

Transceiver unit

905

Antenna

906

FIG. 9

Antenna

1001

Control circuit

1002

Memory

Processor

1000

Input/Output apparatus

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910117982